## Europäisches Patentamt

## European Patent Office

## Office européen des brevets

(19)

(11) Veröffentlichungsnummer: **0 335 194 B1**

(12) **EUROPÄISCHE PATENTSCHRIFT**

(45) Veröffentlichungstag der Patentschrift: **26.05.93**

(51) Int. Cl.⁵: **H02H 7/12**, H02M 3/335

(21) Anmeldenummer: **89104718.5**

(22) Anmeldetag: **16.03.89**

(54) **Verfahren zur Begrenzung des Ausgangsstromes einer Stromversorgung.**

(30) Priorität: **25.03.88 DE 3810224**

(43) Veröffentlichungstag der Anmeldung:
**04.10.89 Patentblatt 89/40**

(45) Bekanntmachung des Hinweises auf die
Patenterteilung:
**26.05.93 Patentblatt 93/21**

(84) Benannte Vertragsstaaten:
**DE FR GB IT NL**

(56) Entgegenhaltungen:
**DE−A− 3 112 377**
**FR−A− 2 431 216**
**FR−A− 2 441 952**

(73) Patentinhaber: **SIEMENS AKTIENGESELL−
SCHAFT
Wittelsbacherplatz 2
W− 8000 München 2(DE)**

(72) Erfinder: **Feldtkeller, Martin
Josephsburgstrasse 59
W− 8000 München 80(DE)**

**Beschreibung**

Die Erfindung bezieht sich auf ein Verfahren zur Begrenzung des Ausgangsstromes einer Stromversorgung nach dem Oberbegriff des Anspruches 1.

Die Strom–Spannungscharakteristik einer Stromversorgung läßt sich in zwei Bereiche einteilen, den Regelbereich und den Überlastbereich. Während im Regelbereich eine vom Laststrom unabhängige Ausgangsspannung angestrebt wird, ist der Überlastbereich dagegen meistens als Strombegrenzung ausgelegt.

Eine nach dem Prinzip des freischwingenden Sperrwandlers arbeitende Stromversorgung gibt im Überlastbereich einen Ausgangsstrom $I_A$ ab, der von der Eingangsspannung $U_E$, der Ausgangsspannung $U_A$, dem Übersetzungsverhältnis $\ddot{u}$ des Transformators und vom Primärspitzenstrom $I_P$ abhängt. Formal läßt sich dieser Zusammenhang wie folgt beschreiben:

$$I_A = \ddot{u}\ \frac{I_P}{2} \cdot \frac{U_E}{U_E + \ddot{u} \cdot U_A} \qquad\qquad (1)$$

Bezeichnend dabei sind eine starke Abhängigkeit des Ausgangsstromes $I_A$ von der Eingangsspannung $U_E$ und ein relativ hoher Kurzschlußstrom.

Um dem entgegenzuwirken, sorgen, wie beispielsweise aus der US–PS 4 291 367 bekannt, zwei getrennte Regelungen für eine Zurücknahme des Primärspitzenstromes jeweils mit abnehmender Ausgangsspannung und mit zunehmender Eingangsspannung.

Dabei macht sich insbesondere bei niedrigen Eingangsspannungen eine unzureichende Kurzschlußstrombegrenzung aufgrund sich gegenseitig beeinflußender Regelbereiche bemerkbar.

Der Erfindung liegt demgemäß die Aufgabe zugrunde, den Ausgangsstrom eines freischwingenden Sperrwandlers in allen Betriebszuständen hinreichend zu begrenzen.

Die Aufgabe wird bei einem gattungsgemäßen Verfahren durch die kennzeichnenden Merkmale des Anspruchs 1 gelöst.

Weiterbildungen der Erfindung sind Gegenstand von Unteransprüchen.

Die Erfindung bringt den Vorteil mit sich, daß der Ausgangsstrom eines freischwingenden Sperrwandlers durch eine einzige, die Funktionsweise eines derartigen Sperrwandlers berücksichtigende Regelung in allen Betriebszuständen auf einem definierten Wert gehalten wird, wodurch auch im Kurzschlußfalle eine ausreichende Strombegrenzung gegeben ist. Darüber hinaus ist bei der Durchführung des obengenannten Verfahrens ein gegenüber bekannten Regelungen geringerer schaltungstechnischer Aufwand erforderlich.

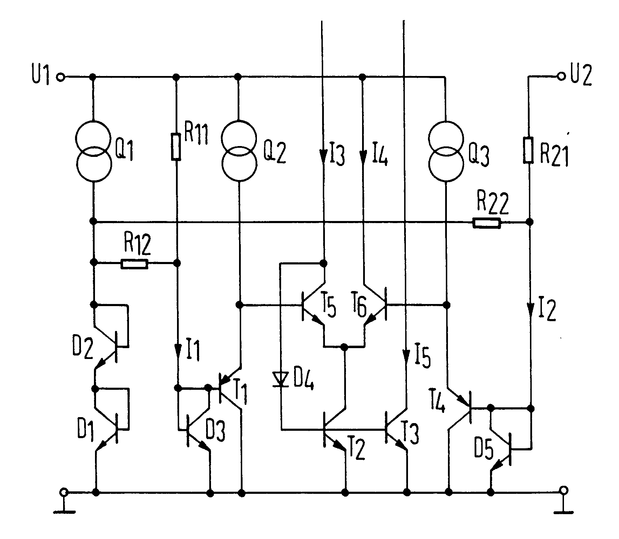

Die Erfindung wird nachfolgend anhand des in der Zeichnung dargestellten Ausführungsbeispiels näher erläutert. Die einzige Figur zeigt als Ausführungsbeispiel das Schaltbild einer Analogrechenschaltung.

In der Zeichnung ist ein in Differenzverstärkerschaltung betriebenes npn–Transistorpaar $T_5$,$T_6$ dargestellt, dessen gekoppelte Emitter mit dem Kollektor eines npn–Transistors $T_2$ verschaltet ist. Dieser liegt zum einen mit seinem Emitter auf Masse $\perp$ und zum anderen mit seiner Basis über eine in Durchlaßrichtung gepolte Diode $D_4$ an dem zur Stromeinspeisung vorgesehenen Kollektor des Transistors $T_5$ der Differenzverstärkerschaltung. Der andere Transistor $T_6$ der Differenzverstärkerschaltung, der über seinen Kollektor von einer gegenüber Masse $\perp$ positiven ersten Spannung $U_1$ aus gespeist wird, ist mit einer Ansteuerschaltung verbunden. Diese besteht aus einer Stromquelle $Q_3$, welche die Basis des Transistors $T_6$ an die erste Spannung $U_1$ bindet, aus einem pnp–Transistor $T_4$, welcher kollektorseitig auf Masse $\perp$ liegt und über seinen Emitter an der Stromquelle $Q_3$ angeschlossen ist, und aus einem zu einer Diode verschalteten npn–Transistor $D_5$, welcher in Durchlaßrichtung zwischen Basis und Kollektor des Transistors $T_4$ liegt. Darüber hinaus wird die Basis des Transistors $T_4$ über einen Widerstand $R_{21}$ an eine gegenüber Masse $\perp$ positive Spannung $U_2$ gelegt. Die Eingangsgröße der Ansteuerschaltung ist ein Strom $I_2$, der sich aus den durch zwei Widerstände $R_{21}$ und $R_{22}$ fließenden Teilströmen zusammensetzt. Die Basis des Transistors $T_5$ ist ebenfalls mit einer Ansteuerschaltung, bestehend aus einer Stromquelle $Q_2$, welche die Basis des Transistors $T_5$ an die erste Spannung $U_1$ bindet, aus einem pnp–Transistor $T_1$, welcher kollektorseitig auf Masse $\perp$ liegt und mit seinem Emitter an der Stromquelle $Q_2$ angeschlossen ist und aus einem zu einer Diode verschalteten npn–Transistor $D_3$, welcher in Durchlaßrichtung zwischen Kollektor und Basis des Transistors $T_1$ liegt, verbunden. Die Eingangsgröße der zweiten Ansteuerschaltung ist ein Strom $I_1$, der sich aus den durch zwei Widerstände $R_{11}$ und $R_{12}$ fließenden Teilströmen zusammensetzt. Darüber hinaus umfaßt das gezeigte Ausführungsbeispiel eine Referenzspannungsquelle bestehend aus einer Stromquelle $Q_1$, welche von der ersten Spannung $U_1$ aus zwei seriell in Durchlaßrichtung liegende und zu

2

EP 0 335 194 B1

Dioden verschaltete npn – Transistoren $D_1$ und $D_2$ speist, wobei der Transistor $D_1$ über seinen Emitter mit Masse $\perp$ verbunden ist. Vom Kollektor des Transistors $D_2$ aus führt der Widerstand $R_{12}$ auf die Basis des Transistors $T_1$ und der Widerstand $R_{22}$ auf die Basis des Transistors $T_4$. Die Eingangsgrößen der gezeigten Schaltungsanordnung bilden die erste und zweite Spannung $U_1$ und $U_2$, sowie der Kollektorstrom $I_3$ des Transistors $T_5$, während die Ausgangsgröße durch den Kollektorstrom $I_5$ eines zu einer Stromsenke verschalteten npn – Transistors $T_3$, dessen Basis – Emitterstrecke parallel zu der des Transistors $T_2$ liegt, gegeben ist.

Nachdem der prinzipielle Aufbau der in der Zeichnung dargestellten Schaltungsanordnung erläutert worden ist, wird nunmehr auf deren Arbeitsweise näher eingegangen.

Das gezeigte Ausführungsbeispiel läßt sich im wesentlichen in vier Funktionsblöcke aufspalten, nämlich in eine Referenzspannungsquelle mit der Stromquelle $Q_1$ und den Transistoren $D_1$ und $D_2$, in eine Differenzverstärkerstufe mit den Transistoren $T_5$ und $T_6$, sowie den Transistoren $T_2$ und $T_3$ und der Diode $D_4$, und in zwei identisch aufgebaute Logarithmierstufen bestehend aus einer Stromquelle $Q_2, Q_3$, einem Transistor $T_1, T_4$ und einem, zu einer Diode verschalteten Transistor $D_3, D_5$. Die Differenzverstärkerstufe ist so ausgelegt, daß das Verhältnis der Kollektorströme $I_3$ und $I_4$ der Transistoren $T_5$ und $T_6$ gleich der exponentiellen Differenz ihrer Basisspannungen ist. Aufgrund der logarithmischen Ansteuerung der Differenzverstärkerstufe ergibt sich damit folgende Abhängigkeit: Die Eingangsströme $I_1$ und $I_2$ der Logarithmierstufen verhalten sich zueinander wie die zugehörigen Kollektorströme $I_3$ und $I_4$ der Differenz – verstärkerstufe. Bei geeigneter Auswahl der Transistoren $T_2$ und $T_3$ ergeben sich aufgrund der identischen Ansteuerung für beide Transistoren gleiche Kollektorströme. Der Strom $I_5$ entspricht damit der Summe der beiden Ströme $I_3$ und $I_4$. Schließlich ergeben sich bei geeigneter Dimensionierung der Referenzspan – nungsquelle für den Fall, daß die Widerstände $R_{11}$ und $R_{12}$ sowie die Widerstände $R_{21}$ und $R_{22}$ gleiche Werte besitzen, die Beziehungen, daß der Strom $I_1$ gleich dem Quotienten aus der ersten Spannung $U_1$, welche gleichzeitig die Versorgungsspannung der Schaltungsanordnung darstellt, und dem Widerstand $R_{11}$ ist, und daß der Strom $I_2$ gleich dem Quotienten der zweiten Spannung $U_2$ und dem Widerstand $R_{21}$ ist. Damit ergibt sich für die gesamte Schaltungsanordnung folgender Zusammenhang:

$$I_5 = I_3 \cdot (1 + \frac{R_{11}}{R_{21}} \cdot \frac{U_2}{U_1}) = I_3 \cdot (1 + \frac{R_{12}}{R_{22}} \cdot \frac{U_2}{U_1}) \qquad (2)$$

Demgegenüber erhält man durch Umformen der Gleichung (1) die Beziehung:

$$I_P = \frac{2 I_A}{ü} \cdot (1 + ü \cdot \frac{U_A}{U_E}) \qquad (3)$$

Sie beschreibt, wie bei einem freischwingenden Sperrwandler im Überlastbereich der Primärspitzen – strom $I_P$ in Abhängigkeit von der Eingangsspannung $U_E$, der Ausgangsspannung $U_A$ und dem Überset – zungsverhältnis ü nachgeführt werden muß, um einen definierten Ausgangsstrom $I_A$ einzustellen.

Ausgehend von Anspruch 1 ist die Grundform des Verfahrens in Gleichung (4) formal dargestellt:

$$I_5 = K_3 \cdot (K_2 + K_1 \cdot \frac{U_2}{U_1}) \qquad (4)$$

Das Ausführungsbeispiel zeigt die Erfindung dahingehend weitergebildet, daß die Funktionsweise der Schaltungsanordnung der bei Gleichung (3) verwendeten Form angeglichen ist. Dazu wird eine erste Konstante $K_1$ der Grundform gleich dem Übersetzungsverhältnis ü des im Sperrwandler verwendeten Transformators und eine zweite Konstante $K_2$ gleich 1 gesetzt. Darüber hinaus werden die Eingangsgrößen so gewählt, daß die Analogrechenschaltung bei der Quotientenbildung die Ausgangsspannung $U_A$ des Sperrwandlers durch dessen Eingangsspannung $U_E$ dividiert. Der Vorteil liegt nun darin, daß ausschließlich über eine dritte Konstante $K_3$ der Ausgangsstrom des Sperrwandlers festgelegt ist. Für das gezeigte Anwendungsbeispiel bedeutet dies: Setzt man die zweite Spannung $U_2$ gleich der Ausgangsspannung $U_A$

3

und die erste Spannung $U_1$ gleich der Eingangsspannung $U_E$, so wird bei entsprechender Dimensionierung der Widerstände $R_{11}$ und $R_{21}$ bzw. $R_{12}$ und $R_{22}$ der Strom $I_5$, aus dem der für einen gegebenen, von dem Strom $I_3$ abhängigen, Ausgangsstrom erforderliche Primärstrom des Sperrwandlers abzuleiten ist, eingestellt. Zweckmäßigerweise wird die dritte Konstante als weitere Eingangsgröße verwendet, so daß der Ausgangsstrom des Sperrwandlers vorteilhafterweise von außen einstellbar ist. Im vorliegenden Fall erfolgt dies durch eine externe Einprägung des Stromes $I_3$.

Abschließend sei noch bemerkt, daß sich die gezeigte Schaltungsanordnung aufgrund des geringen schaltungstechnischen Aufwandes insbesondere zur Mitintegration in weitere, zum Betrieb des Sperrwandlers verwendete integrierte Bausteine sehr gut eignet.

Darüber hinaus sei darauf hingewiesen, daß durch Umformung der Gleichung (2) und einer entsprechenden Auslegung der drei Konstanten der Grundform weitere Ausführungsmöglichkeiten entstehen.

**Patentansprüche**

1. Verfahren zur Begrenzung des Ausgangsstromes einer Stromversorgung unter Verwendung eines freischwingenden Sperrwandlers durch Nachbilden des Primärspitzenstromes in Abhängigkeit von der Eingangs – und der Ausgangsspannung des Sperrwandlers,
**dadurch gekennzeichnet,** daß der Quotient aus zwei gegebenen Eingangsgrößen gebildet und dieser mit einer ersten Konstanten multipliziert wird, daß dazu eine zweite Konstante addiert und anschließend mit einer dritten Konstanten multipliziert wird, daß die beiden Eingangsgrößen durch Eingangs – ($U_1$) und Ausgangsspannung ($U_2$) des Sperrwandlers gegeben sind, daß bei der Quotientenbildung die Ausgangsspannung ($U_2$) des Sperrwandlers durch die Eingangsspannung ($U_1$) des Sperrwandlers dividiert wird, daß die Ausgangsgröße als Stellgröße zur Regelung des Primärspitzenstromes vorgesehen ist und daß die drei Konstanten derart dimensioniert sind, daß der Wert des Primärspitzenstromes des Sperrwandlers abhängig von dessen Eingangs – und Ausgangsspannung nachgebildet wird.

2. Verfahren nach Anspruch 1,
**dadurch gekennzeichnet,** daß die erste Konstante dem Übersetzungsverhältnis des im Sperrwandler verwendeten Transformators entspricht und daß die zweite Konstante gleich 1 gesetzt wird.

3. Verfahren nach mindestens einem der Ansprüche 1 und 2,
**dadurch gekennzeichnet,** daß die dritte Konstante als weitere Eingangsgröße vorgesehen ist.

4. Schaltungsanordnung zur Durchführung des Verfahrens nach mindestens einem der Ansprüche 1 bis 3,
**dadurch gekennzeichnet,** daß beim Nachführen des Primärstromes eine Analogrechenschaltung zur Anwendung kommt, die aus zwei emittergekoppelten Transistoren ($T_5$ und $T_6$) in Differenzverstärker – schaltung besteht, daß einer ($T_6$) der beiden Transistoren in Differenzverstärkerschaltung über seine Basis mit dem Ausgang einer ersten Ansteuerschaltung verbunden ist und über seinen Kollektor an einer auf Masse ($\perp$) bezogenen ersten Spannung ($U_1$) liegt, daß der andere ($T_5$) der beiden Transistoren ($T_5$ und $T_6$) in Differenzverstärkerschaltung über seine Basis mit dem Ausgang einer zweiten Ansteuerschaltung verbunden ist und mit seinem zur Stromeinspeisung vorgesehenen Kollektor über eine in Durchlaßrichtung gepolte Diode ($D_4$) an die Basis eines emitterseitig auf Masse ($\perp$) liegenden und kollektorseitig mit den gekoppelten Emittern der Transistoren ($T_5$ und $T_6$) in Differenzverstärker – schaltung verschalteten Transistors ($T_2$), dessen Basis – Emitter – Strecke parallel liegt zu der Basis – Emitter – Strecke eines zu einer Stromsenke verschalteten Transistors ($T_3$), angeschlossen ist, daß die erste Ansteuerschaltung aus einem mit dem Kollektor an Masse ($\perp$) und mit dem den Ausgang der ersten Ansteuerschaltung bildenden Emitter über eine Stromquelle ($Q_3$) an der ersten Spannung ($U_1$) angeschlossenen Transistor ($T_4$), dessen über eine in Durchlaßrichtung gepolte Diode ($D_5$) mit Masse ($\perp$) verbundene Basis zum einen über einen Widerstand ($R_{21}$) an eine auf Masse bezogene zweite Spannung ($U_2$) und zum anderen über einen Widerstand ($R_{22}$) an den Ausgang einer Referenzspannungsquelle angeschlossen ist, besteht, daß die zweite Ansteuerschaltung aus einem mit dem Kollektor an Masse ($\perp$) und mit dem den Ausgang der zweiten Ansteuerschaltung bildenden Emitter über eine Stromquelle ($Q_2$) an der ersten Spannung ($U_1$) angeschlossenen Transistor ($T_1$), dessen über eine in Durchlaßrichtung gepolte Diode ($D_3$) mit Masse verbundene Basis zum einen über einen Widerstand ($R_{11}$) an der ersten Spannung ($U_1$) und zum anderen über einen Widerstand ($R_{12}$) an den Ausgang einer Referenzspannungsquelle angeschlossen ist, besteht, daß die Referenzspannungsquelle aus zwei in Durchlaßrichtung gepolten und in Reihe geschalteten Dioden ($D_1$ und $D_2$), welche einen als Ausgang

EP 0 335 194 B1

der Referenzspannungsquelle vorgesehenen und über eine Stromquelle ($Q_1$) an der ersten Spannung ($U_1$) angeschlossenen Knotenpunkt mit Masse ($\perp$) verbinden, aufgebaut ist, daß jeweils die beiden Widerstände ($R_{11}$,$R_{12}$ bzw. $R_{21}$,$R_{22}$) einer Ansteuerschaltung den gleichen Wert aufweisen, daß als erste Spannung ($U_1$) die Eingangsspannung des Sperrwandlers und als zweite Spannung ($U_2$) die Ausgangsspannung des Sperrwandlers vorgesehen ist und daß als Stellgröße zur Regelung des Primärspitzenstromes des Sperrwandlers der Kollektorstrom ($I_5$) des zu einer Stromsenke verschalteten Transistors ($T_3$) vorgesehen ist.

5. Schaltungsanordnung nach Anspruch 4,
   **dadurch gekennzeichnet,** daß der Wert der beiden Widerstände ($R_{11}$,$R_{12}$) der zweiten Ansteuer-schaltung sich zu dem Wert der beiden Widerstände ($R_{21}$,$R_{22}$) der ersten Ansteuerschaltung wie das Übersetzungsverhältnis (ü) des im Sperrwandler verwendeten Transformators verhält.

**Claims**

1. Method for limiting the output current of a power supply with the use of a self-oscillating flyback converter by simulating the primary peak current as a function of the input and output voltages of the flyback converter, characterised in that the quotient is formed from two input variables and the former is multiplied by a first constant, in that a second constant is added thereto and subsequently multiplied by a third constant, in that the two input variables are given by the input voltage ($U_1$) and output voltage ($U_2$) of the flyback converter, in that in the quotient formation the output voltage ($U_2$) of the flyback converter is divided by the input voltage ($U_1$) of the flyback converter, in that the output variable is provided as a manipulated variable for regulating the primary peak current, and in that the three constants are dimensioned such that the value of the primary peak current of the flyback converter is simulated as a function of its input and output voltage.

2. Method according to Claim 1, characterised in that the first constant corresponds to the transformation ratio of the transformer used in the flyback converter, and in that the second constant is set equal to 1.

3. Method according to at least one of Claims 1 and 2, characterised in that the third constant is provided as a further input variable.

4. Circuit arrangement for carrying out the method according to at least one of Claims 1 to 3, characterised in that an analog calculating circuit is applied in following the primary current, which comprises two emitter-coupled transistors ($T_5$ and $T_6$) in a differential amplifier circuit, in that one ($T_6$) of the two transistors in the differential amplifier circuit is connected via its base to the output of a first drive circuit and connected via its collector to a first voltage ($U_1$) referred to earth ($\perp$), in that the other ($T_5$) of the two transistors ($T_5$ and $T_6$) in the differential amplifier circuit is connected via its base to the output of a second drive circuit and is connected with its collector, which is provided for feeding in current, via a diode ($D_4$) polarised in the conducting direction to the base of a transistor ($T_2$), which is connected on the emitter side to earth ($\perp$) and is connected on the collector side to the coupled emitters of the transistors ($T_5$ and $T_6$) in the differential amplifier circuit, and whose base-emitter junction is parallel to the base-emitter junction of a transistor ($T_3$) connected to a current sink, in that the first drive circuit comprises a transistor ($T_4$), which is connected with the collector to earth ($\perp$) and, via a current source ($Q_3$), with the emitter forming the output of the first control circuit to the first voltage ($U_1$), and whose base, which is connected to earth ($\perp$) via a diode ($D_5$) polarised in the conducting direction, is connected to a second voltage ($U_2$) referred to earth via a resistor ($R_{21}$), on the one hand, and to the output of a reference voltage source via a resistor ($R_{22}$), on the other hand, in that the second drive circuit comprises a transistor ($T_1$) which is connected with the collector to earth ($\perp$) and via a current source ($Q_2$) with the emitter forming the output of the second control circuit to the first voltage ($U_1$), and whose base, which is connected to earth via a diode ($D_3$) polarised in the conducting direction, is connected to the first voltage ($U_1$) via a resistor ($R_{11}$), on the one hand, and to the output of a reference voltage source via a resistor ($R_{12}$), on the other hand, in that the reference voltage source is assembled from two diodes ($D_1$ and $D_2$), which are polarised in the conducting direction, connected in series, and connects to earth ($\perp$) a node which is provided as the output of the reference voltage source and is connected via a current source ($Q_1$) to the first voltage ($U_1$), in that in each case the two resistors ($R_{11}$, $R_{12}$ and $R_{21}$, $R_{22}$, respectively) of a drive circuit have the same value, in that the input voltage of the flyback converter is provided as the first voltage ($U_1$), and the output voltage of the

5

flyback converter is provided as the second voltage ($U_2$), and in that the collector current ($I_5$) of the transistor ($T_3$) connected to a current sink is provided as the manipulated variable for regulating the primary current peak of the flyback converter.

**5.** Circuit arrangement according to Claim 4, characterised in that the value of the two resistors ($R_{11}$, $R_{12}$) of the second drive circuit is to the value of the two resistors ($R_{21}$, $R_{22}$) of the first drive circuit as a transformation ratio (ü) of the transformer used in the flyback converter.

**Revendications**

**1.** Procédé pour limiter le courant de sortie d'une alimentation de courant, avec mise en oeuvre d'un convertisseur à oscillateur bloqué auto – oscillant, par simulation du courant de crête primaire, en fonction de la tension d'entrée et de la tension de sortie du convertisseur à oscillateur bloqué, caractérisé en ce que le quotient est formé de deux grandeurs d'entrée données et est multiplié par une première constante, en ce que l'on y ajoute une deuxième constante et qu'on procéde ensuite à une multiplication par une troisième constante, en ce que les deux grandeurs d'entrée sont données par la tension d'entrée ($U_1$) et la tension de sortie ($U_2$) du convertisseur à oscillateur bloqué, en ce que, lors de la formation du quotient, la tension de sortie ($U_2$) du convertisseur à oscillateur bloqué est divisée par la tension d'entrée ($U_1$) du convertisseur à oscillateur bloqué, en ce que la grandeur de sortie est prévue comme grandeur de réglage pour régler le courant de crête primaire, et en ce que les trois constantes sont dimensionnées de telle sorte que la valeur du courant de crête primaire du convertisseur à oscillateur bloqué est simulée en fonction de celle de la tension d'entrée et de la tension de sortie.

**2.** Procédé selon la revendication 1, caractérisé en ce que la première constante correspond au rapport de transformation du transfor – mateur utilisé dans le convertisseur à oscillateur bloqué, et en ce que la deuxième constante est choisie égale à 1.

**3.** Procédé selon au moins une des revendications 1 et 2, caractérisé en ce que la troisième constante est prévue comme autre grandeur d'entrée.

**4.** Dispositif pour la mise en oeuvre du procédé selon l'une au moins des revendications 1 à 3, caractérisé en ce que, lors de l'asservissement du courant primaire, on utilise un circuit analogique d'ordinateur qui se compose de deux transistors ($T_5$ et $T_6$), couplés côté émetteur, montés en circuit amplificateur différentiel, en ce que l'un ($T_6$) des deux transistors montés en circuit amplificateur différentiel, est relié, par sa base, à la sortie d'un premier circuit de commande, et est porté, par l'intermédiaire de son collecteur, à une première tension ($U_1$) rapportée à la masse ($\perp$), en ce que l'autre ($T_5$) des deux transistors ($T_5$ et $T_6$) montés en circuit amplificateur différentiel, est relié, par sa base, à la sortie d'un deuxième circuit de commande et est relié, par son collecteur, prévu pour l'alimentation de courant, et par l'intermédiaire d'une diode ($D_4$) en montage à sens direct, à la base d'un transistor ($T_2$) qui est relié, côté émetteur à la masse ($\perp$), et côté collecteur, aux émetteurs couplés des transistors ($T_5$ et $T_6$) montés en circuit amplificateur différentiel, et dont la voie base – émetteur est en parallèle sur la voie base – émetteur d'un transistor ($T_3$) monté à un puits de courant, en ce que le premier circuit de commande se compose d'un transistor ($T_4$) qui est, par son collecteur qui est relié à la masse ($\perp$), et, par son émetteur formant la sortie du premier circuit de commande, relié par l'intermédiaire d'une source de courant ($Q_3$), à la première tension ($U_1$), alors que la base dudit transistor ($T_4$) est portée à la masse par l'intermédiaire d'une diode ($D_5$) en montage à sens direct, d'une part et par l'intermédiaire d'une résistance ($R_{21}$), à une deuxième tension ($U_2$) rapportée à la masse, et d'autre part et par l'intermédiaire d'une résistance ($R_{22}$), à la sortie d'une source de tension de référence, en ce que le deuxième circuit de commande se compose d'un transistor ($T_1$) qui est, par le collecteur porté à la masse ($\perp$) et par l'émetteur formant la sortie du deuxième circuit de commande, relié, par l'intermédiaire d'une source de courant ($Q_2$), à la première tension ($U_1$), alors que la base dudit transistor ($T_1$), placée à la masse par l'intermédiaire d'une diode ($D_3$) polarisée dans le sens direct, est reliée, d'une part et par l'intermédiaire d'une résistance ($R_{11}$), à la première tension ($U_1$), et, d'autre part et par l'intermédiaire d'une résistance ($R_{12}$), à la sortie d'une source de courant de référence, en ce que la source de courant de référence est constituée de deux diodes ($D_1$ et $D_2$) reliées en série et polarisées dans le sens direct, qui relient à la masse ($\perp$) un noeud qui est prévu comme sortie de la source de tension de référence et qui est relié par l'intermédiaire d'une source de courant ($Q_1$) à la première tension ($U_1$), en ce que les deux résistances ($R_{11}$, $R_{12}$ et $R_{22}$, $R_{21}$) de chacun des circuits de commande présentent la même valeur, en ce que la tension d'entrée du convertisseur à oscillateur bloqué est prévue comme première tension ($U_1$) et la tension de sortie du convertisseur à oscillateur bloqué est prévue comme deuxième tension ($U_2$), et en ce que le courant de collecteur ($I_5$) du transistor ($T_3$) monté à un puits de courant est prévu comme grandeur de réglage pour régler le courant de crête primaire du convertisseur à oscillateur bloqué.

5. Dispositif selon la revendication 4,
caractérisé en ce que le rapport de la valeur des deux résistances ($R_{11}$, $R_{12}$) du deuxième circuit de commande et de la valeur des deux résistances ($R_{21}$, $R_{22}$) du premier circuit de commande est dans la proportion du rapport de transmission (ü) du transformateur utilisé dans le convertisseur à oscillateur bloqué.